# EUROPEAN PATENT APPLICATION

(11) **EP 4 197 645 A1**
(43) Date of publication of application: **21.06.2023**
(21) Application number: 21214426.5
(22) Date of filing: 14.12.2021
(51) Int. Cl.: B05B 7/24

(54) **COATING DEVICE**

(71) Applicant: Yara International ASA, 0277 Oslo (NO)
(72) Inventor: de Vries, Pieter, 4541HJ Sluiskil (NL)
(74) Representative: De Clercq & Partners

(57) **Abstract**

The present disclosure provides a device for spraying a liquid composition, comprising a container comprising an inner compartment and an outer compartment, wherein the inner compartment is suitable for receiving and containing a liquid composition to be sprayed, the outer compartment comprises a gas inlet and a gas outlet, and is suitable for containing a gas under pressure, a means for spraying a liquid composition comprising a gas inlet and a liquid inlet, a liquid connection connecting the inner compartment of the container to the liquid inlet of the means for spraying a liquid composition, and a gas connection connecting the gas outlet of the outer compartment to the gas inlet of the means for spraying a liquid composition. The disclosure also provides a method for coating a solid, particulate composition with the device described therein.

## Description

### Field of the invention

The present disclosure is related to the field of spraying devices, in particular for spraying a coating composition onto a solid, particulate composition, thereby coating the solid, particulate composition with a coating composition.

### Background of the invention

Solid particles are produced in a range of industrial fields, such as fertilizers. It may be desirable to coat such solid particles for a variety of purposes, such as improve the performance or characteristic of the particles, add a color to the particles, or add new chemical compounds to the solid particles.

A number of equipment can be used, in particular a coating drum. A coating drum is a device comprising a rotating container and sprayers. The particles to be coated are placed in the rotating container and the coating composition is fed to the sprayers. The rotating movement ensures that all the particles are evenly coated without damaging the particles. These devices can be very big and capable of coating large amounts of particles at the same time, but also quite expensive.

In a plant or R&D unit, there might be the need to coat a small amount of particles, for example to test a new coating composition or new particles to be coated. A small and cheap device is preferred to facilitate small scale tests. Small scale coating drums can be found and often look like a cement mixer, a device comprising a container with a capacity of 50 to 200 liters that can rotate along an axis. The coating composition is conventionally poured over the container and the particles are mixed in the container until an even coating is obtained.

Containers with incorporated nozzle also exist but they lack flexibility because the position of the nozzle is fixed and they are more expensive than containers without nozzle, such as concrete mixers.

However, such a system is not very practical if very small quantities of coating compositions, for example from 10 to 100 g of a coating composition, are used and/or if the coating composition is very viscous or solid at ambient temperature. So there is a need to develop a new device for coating solid particles.

### Summary of the invention

It was found out that applying a coating composition with a spraying device, in particular a spraying device spraying a liquid composition as an aerosol, was an advantage when applying small amounts, such as from 10 to 100 grams, of a coating composition. Spraying a liquid composition ensures that the composition is divided in small droplets, and the small droplets allow a better distribution of the composition onto a solid, particulate composition instead of having a lump of liquid coming into contact with only a few solid particles of the solid, particulate composition.

The device according to the present invention is also able to heat up a coating composition, as this may be required for coating compositions which are viscous or solid at ambient temperature.

In a first aspect, the present disclosure provides a device for spraying a liquid composition, comprising a container comprising an inner compartment and an outer compartment, wherein the inner compartment is suitable for receiving and containing a liquid composition to be sprayed, the outer compartment comprises a gas inlet and a gas outlet, and is suitable for containing a gas under pressure, a means for spraying a liquid composition comprising a gas inlet and a liquid inlet, a liquid connection connecting the inner compartment of the container to the liquid inlet of the means for spraying a liquid composition, and a gas connection connecting the gas outlet of the outer compartment to the gas inlet of the means for spraying a liquid composition.

In another aspect, the present disclosure provides a method for coating a solid, particulate composition with a coating composition, the method comprising the steps of: a) providing a solid, particulate composition in a rotating container having one opening; b) starting the rotation of the rotating container; c) positioning the means for spraying a liquid composition of a device according to the present disclosure in or near the opening of the rotating container, such that the means is arranged to spray a liquid composition onto the solid, particulate composition; d) adding an amount of a coating composition in the inner compartment of a device according to the present disclosure; e) providing a gas, in particular a gas with a temperature above ambient temperature, to the gas inlet of the device according to the present disclosure; and f) spraying the coating composition as an aerosol onto the solid, particulate composition, thereby coating the solid, particulate composition with the coating composition; wherein step f) is carried out last.

### Brief description of the figures

The following description of the figure of a specific embodiment of a device according to the present disclosure is only given by way of example and is not intended to limit the present explanation, its application or use. In the figure, identical reference numerals refer to the same or similar parts and features.
Figure 1 represents an embodiment of the device according to the present invention.
Figure 2 represents an embodiment of a means for spraying that may be comprised in a device according to the present disclosure.
Figure 3 represents another embodiment of a means for spraying that may be comprised in a device according to the present disclosure.
Figure 4 is a picture of an embodiment of the device according to the present invention.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

In a first aspect, the present disclosure provides a device for spraying a liquid composition, comprising a container comprising an inner compartment and an outer compartment, wherein the inner compartment is suitable for receiving and containing a liquid composition to be sprayed, the outer compartment comprises a gas inlet and a gas outlet, and is suitable for containing a gas under pressure, a means for spraying a liquid composition comprising a gas inlet and a liquid inlet, a liquid connection connecting the inner compartment of the container to the liquid inlet of the means for spraying a liquid composition, and a gas connection connecting the gas outlet of the outer compartment to the gas inlet of the means for spraying a liquid composition.

The device comprises four main components: a container, a means for spraying a liquid composition, a liquid connection and a gas connection. The container comprises an inner compartment or first compartment, and an outer compartment or second compartment, partially or fully surrounding the inner compartment. The inner and outer compartments are separated from each other by a physical wall, i.e. liquids or solids may not transfer from one compartment to the other. The two compartments may share a common wall, i.e. the outer wall of the inner compartment may be the inner wall of the outer compartment. The two compartments may exchange heat, in particular wherein the two compartment share a common wall and the common wall is not thermally insulated.

In one embodiment, the inner and outer compartments have a common axis of symmetry. In one embodiment, the inner and outer compartments have a common axis of symmetry and a cylindrical shape. In one embodiment, the inner compartment is a cylinder with an axis of symmetry, and the outer compartment is a hollow cylinder having the same axis of symmetry than the inner compartment, and the wall of the inner compartment is the wall with the smallest diameter of the outer compartment.

The inner compartment may have an opening on its top end, or at least a movable lid on its top end, so that the composition to be sprayed can be added to the inner compartment.

The outer compartment comprises a gas inlet and a gas outlet. The gas inlet is arranged to receive a gas under pressure. The gas may be under pressure and/or heated above ambient temperature. As used herein, a gas under pressure means that the gas has a pressure above the atmospheric pressure.

The second component of the device is a means for spraying a liquid composition. Such means are well known in the art. In one embodiment, the means for spraying a liquid composition comprises a nozzle, in particular a spraying nozzle, to spray the liquid composition. A spraying nozzle can create an aerosol from a gas stream and a liquid composition. The means for spraying a liquid composition comprises an inlet for a gas, and an inlet for a liquid composition to be sprayed.

In one embodiment, the means for spraying a liquid composition comprises a spraying nozzle and an air cap. A known device to spray a liquid comprises a spraying nozzle and an air cap. The shape and size of the air cap and the spraying nozzle determine the characteristics of the spraying pattern of the means for spraying.

The container is connected to the means for spraying a liquid composition via two connections: a liquid connection connects the inner compartment of the container to the liquid inlet of the means for spraying a liquid composition, in particular to the inlet for a liquid composition of the means for spraying a liquid composition, and a gas connection connects the gas outlet of the outer compartment to the gas inlet of the means for spraying a liquid composition, in particular the inlet for a gas of the means for spraying a liquid composition.

The gas introduced in the gas inlet of the container exits the double-wall container via the gas outlet and is directed to the means for spraying a liquid composition by the liquid connection. Once it reaches the means for spraying a liquid composition, the gas is mixed with the liquid composition to be sprayed and ejects the liquid composition out of the means for spraying a liquid composition.

The gas connection directs the gas from the outer compartment of the container to the gas inlet of the means for spraying a liquid composition.

In one embodiment, the means for spraying a liquid composition comprises a means for regulating the flow of the composition to be sprayed, in particular wherein the means for spraying a liquid composition comprises a threaded component. It may be an advantage that the means for spraying is able to regulate the flow of liquid, so that different amounts of particles can be coated with different weight% of coating liquid. One option is to include a threaded component, such as a screw, in the means. The threaded component is in contact with the flow of liquid and gas, and can regulate the flow of liquid and gas exiting the outlet by varying its position relative to the outlet of the means for spraying. A threaded component can adjust a flow in a continuous manner, i.e. all values of the flow within a particular range may be accessed. But the means or regulating may also be a means for regulating with a discrete method, i.e. wherein only certain values of the flow are accessible within a given range.

In one embodiment, an end of threaded component is located at the outlet of the means for spraying a liquid composition, such that the position of the threaded component determines the opening of the outlet, and thus the spraying rate of the liquid composition. The position of the threaded component may also influence the spraying pattern of the liquid composition.

In one embodiment, the liquid connection and/or the gas connection is fully or partially thermally insulated. It may be an advantage to thermally insulate the gas and/or liquid connections comprised in the device, in particular the liquid connection which is arranged to transport the liquid composition to be sprayed. Some coating compositions may be very viscous or even solid, or gel-like at ambient temperature or temperatures close to ambient temperatures, so it may be an advantage that the liquid composition is insulated from the ambient temperature to reduce the risk of solidification of the coating composition.

In one embodiment, the device comprises a means for heating a gas, in particular wherein the means for heating a gas is attached or connected to the gas inlet of the container. It may be an advantage to heat the gas above ambient temperature, so that the gas may heat up the liquid composition to be sprayed in the container.

In one embodiment, the device comprises a means for heating a liquid composition, in particular wherein the means for heating a liquid composition is configured to heat up a liquid composition passing through the liquid connection. It may be an advantage to heat up the liquid composition above ambient temperature, so that the liquid composition has a suitable viscosity when it reaches the means for spraying. The liquid composition may be heated up by a means for heating and/or the gas directed to the outer compartment of the container.

In one embodiment, the device according to the present invention is able to dispense less than 1.0 weight% relative to the weight of the solid, particulate composition to be coated, or less than 0.1 weight% relative to the weight of the solid, particulate composition to be coated of the coating composition in one operation.

In one embodiment, the device according to the present invention is able to dispense from 0.01 to 1.0 weight%, from 0.05 to 1.0 weight%, from 0.01 to 0.5 weight%, or from 0.01 to 0.1 weight% relative to the weight of the solid, particulate composition to be coated of the coating composition in one operation.

In one embodiment, the means for spraying a liquid composition comprises internal parts such that, in operation, the gas velocity at the outlet of the means is smaller than the gas velocity at the gas outlet of the container. The gas composition is often directed to the gas inlet of the container under pressure, however that pressure might not be enough to ensure a satisfying spraying in the means for spraying. It was found that it was possible to increase the velocity of the gas composition at the outlet of the means for spraying by limiting the space available for the gas inside the means for spraying. For example, the means for spraying may comprise an internal wall comprising a hole between its gas inlet and its outlet, wherein the hole has a smaller diameter than the gas inlet. When a stream of gas goes through a smaller hole, its velocity is increased, and provides a better spraying.

In one embodiment, the device comprises a means for turning on and off the flow of gas and/or coating composition in the connections between the container and the means for spraying, for example a valve.

In one embodiment, the device comprises a cover, such that, in operation, the cover is covering partially or fully the opening of the rotating container containing the solid particles to be coated. The cover may prevent material, such as dust or coating composition, from coming out of the rotating container.

In another aspect, the present disclosure provides an arrangement comprising the device according to the present disclosure and a means for heating a gas, wherein the means for heating a gas is upstream of the gas inlet. The means for heating a gas do not need to be attached or connected to the device according to the present disclosure. The needs to be upstream of the gas inlet. For example, the means for injecting a gas into the gas inlet of the container may comprise a means for heating a gas.

In another aspect, the present disclosure provides a method for coating a solid, particulate composition with a coating composition, the method comprising the steps of: a) providing a solid, particulate composition in a rotating container having one opening; b) starting the rotation of the rotating container; c) positioning the means for spraying a liquid composition of a device according to the present disclosure in or near the opening of the rotating container, such that the means is arranged to spray a liquid composition onto the solid, particulate composition; d) adding an amount of a coating composition in the inner compartment of a device according to the present disclosure; e) providing a gas, in particular a gas with a temperature above ambient temperature, to the gas inlet of the device according to the present disclosure; and f) spraying the coating composition as an aerosol onto the solid, particulate composition, thereby coating the solid, particulate composition with the coating composition; wherein step f) is carried out last.

The device according to the present disclosure allows to deliver a precise amount of liquid composition as an aerosol to the solid, particulate composition to be coated. The spraying rate of the liquid composition can be adjusted in several ways, for example by adjusting the velocity or pressure of the gas composition provided in the gas inlet of the container, or by the means for regulating comprises in the means for spraying if present.

Spraying a composition as an aerosol improves the distribution of the coating composition on the solid particles, in particular if the coating composition is so viscous that it does not spread correctly when it comes into contact with the surface of the solid particles.

The steps of the method can be performed in any order with the proviso that step f), the spraying step, is carried out last. The solid, particulate composition needs to be placed into the rotating container and the spraying device needs to be placed in such a way that the coating composition is sprayed into the container comprising the solid, particulate composition.

In one embodiment, in the absence of any means for turning on and off the flow of gas and/or coating composition in the connections between the container and the means for spraying, the spraying of the coating composition begins once both the coating composition has been added to the container and the gas has been provided to the gas inlet of the device. So, the solid, particulate composition needs to be present in the rotating container, the rotating movement of the container must have been started, and the device according to the present invention needs to be positioned correctly before both the coating composition and the gas are provided to the device. It is possible to provide either the coating composition or the gas at any stage in the method, but the last step before step f) must be either step d) or e).

In one embodiment, the device comprises a means for turning on and off the flow of gas and/or coating composition in the connections between the container and the means for spraying, for example a valve. When the device comprises such a means, steps a) to e) can be performed in any order, and the final step f) comprises opening the means for turning on and off the flow of gas and/or coating composition in the connections between the container and the means for spraying.

The rotating container is designed to hold the solid, particulate composition to be coated and rotate them so that the particles of the composition are evenly coated. The solid, particulate composition may be added before the rotation of the container is started or after.

The device according to the present disclosure is positioned near the rotating container such that the means for spraying a liquid composition of the device is in or near the opening of the rotating container. The means for spraying must be positioned so that, in operation, it sprays a liquid composition into the rotating container and on the solid, particulate composition;

In one embodiment, the gas is air. In one embodiment, the gas is nitrogen. In one embodiment, the gas comprises from 90% to 100%, from 95% to 100%, or from 98% to 100% of nitrogen. It may be an advantage to use nitrogen as a gas in the present method, since air may comprise some water vapor that may be absorbed by the solid, particulate composition.

In one embodiment, the gas provided to the device has a temperature of from 30 to 70 °C, from 30 to 60 °C, or from 30 to 50 °C. In one embodiment, the gas provided to the device has a temperature of above 30 °C, above 40 °C or above 50°C. A gas with a temperature above ambient temperature may heat up the coating composition. Coating compositions may exhibit a lower viscosity with increasing temperatures, and a lower viscosity may be desirable so that the coating forms smaller droplets when sprayed.

For example, the coating compositions disclosed in WO2016083435 (Yara, 2016) comprising a wax, an oil, a resin and a polymer need to be heated up above 30 °C to be suitable to be sprayed.

The coating composition may also be a solid at ambient temperature and may require to be heated up until it turns into a liquid.

Once the coating composition has been sprayed, the device can be moved away from the rotating container. The rotating movement of the rotating container may be stopped once the particles have been evenly coated. Determining whether the particles are evenly coated is usually done by direct visual inspection by the operator.

Once the device has been moved away from the rotating container, and the rotating movement of the rotating container has been stopped, the operator can remove the coated particles from the rotating container.

A large range of products can be sprayed with the present device. In one embodiment, the coating composition comprises a component selected from the group consisting of a spray wax, an oil, a paint, a water-based solution and a solution comprising an organic solvent, such as a glycol.

For example, it was found possible to add from 500 to 1000 ppm (parts per million) by weight of a liquid composition to a container containing 10 to 70 kg of particles to be coated. Said otherwise, it is possible to add from 10 grams of a coating composition with the present device.

In one embodiment the solid, particulate composition provided to the rotating container is a solid, particulate fertilizer composition. In one embodiment, the solid, particulate composition comprises homogeneous and/or non-homogeneous particles comprising a component selected from the group consisting of urea, ammonium nitrate, ammonium sulphate, calcium nitrate, ammonium phosphate, potassium sulphate, potassium chloride, potassium nitrate, and mixtures thereof.

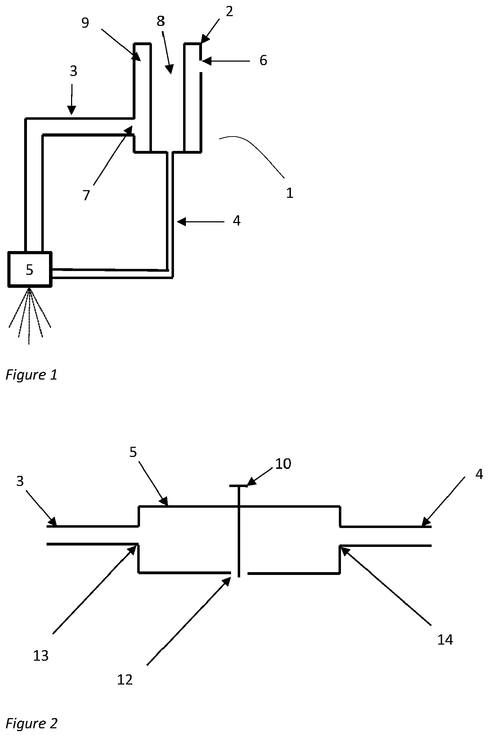

Figure 1 represents an embodiment of a device **1** according to the present disclosure. The device comprises a container **2** comprising an inner compartment **8** and an outer compartment **9.** The inner compartment **8** and the outer compartment **9** have a cylindrical shape, are concentric and share the same axis of symmetry. The outer wall of the inner compartment is also the inner wall of the outer compartment **9.** The inner compartment **8** is suitable for receiving and containing a composition to be sprayed; and the outer compartment **9** comprises a gas inlet **6** and a gas outlet **7.** The device also comprises a means **5** for spraying a liquid composition, a liquid connection **4** connecting the inner compartment **8** of the container **2** to the means for spraying a liquid composition **5,** and a gas connection **3** connecting the gas outlet **7** of the outer compartment **9** to the gas inlet **13** of the means **5** for spraying a liquid composition.
Figure 2 represents an embodiment of a means **5** for spraying a liquid composition in a device according to the present disclosure. The means **5** comprises a liquid inlet **14** which is connected to the liquid connection **4,** and a gas inlet **13** which is connected to the gas connection **3.** The means **5** comprises an outlet **12,** from which the mixture of liquid composition and gas exits the means **5.** The means **5** comprises a means for regulating a flow **10** which is adjustable, in particular in the direction perpendicular to the wall comprising the outlet **12** to regulate the exiting flow of liquid composition and mixture. The means for regulating a flow **10** may be a threaded elongated device, such as a screw.

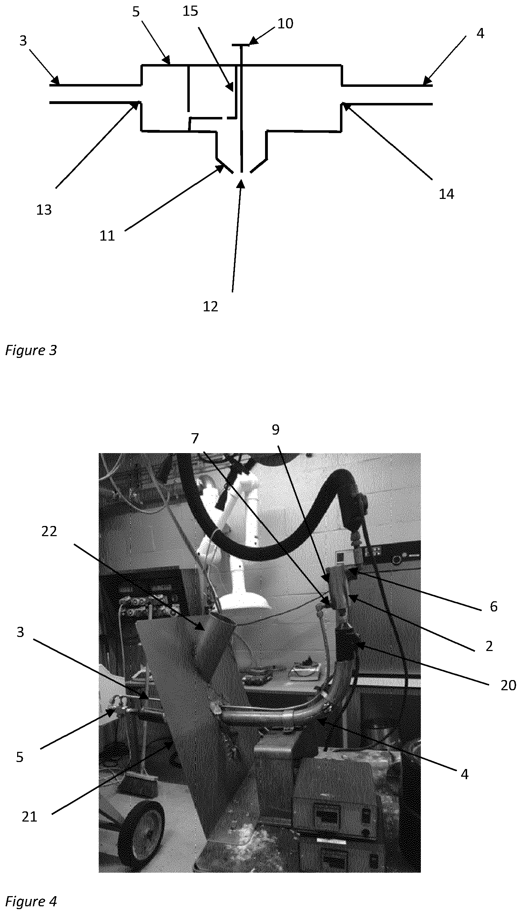

Figure 3 represents another embodiment of a means **5** for spraying a liquid composition in a device according to the present disclosure. The means **5** comprises a liquid inlet **14** which is connected to the liquid connection **4,** and a gas inlet **13** which is connected to the gas connection **3.** The means **5** comprises an outlet **12,** from which the mixture of liquid composition and gas exits the means **5.** The means for regulating a flow **10** may be a threaded elongated device, such as a screw. The means **5** also comprises an air cap **11,** which directs the flow of liquid ad gas exiting the means **5** and influences the spraying pattern of the means **5.** The means **5** comprises an internal **wall 15** comprising a hole, which hole is smaller than the size of the gas inlet **13,** such that the velocity of the gas after the internal wall **15** is smaller than the velocity of the gas entering the means **5** at the gas inlet **13.** In one experiment, the velocity of the gas at the gas inlet **13** was measured at 10.5 m/s, and the velocity of the gas at the outlet **12** was measured at 5.4 m/s.
Figure 4 is a picture of a working embodiment of the device according to the present disclosure. The device comprises a container **2** with an inner compartment and an outer compartment **9.** The inner compartment **8** and the outer compartment **9** have a cylindrical shape, are concentric and share the same axis of symmetry. The outer wall of the inner compartment is also the inner wall of the outer compartment **9.** The inner compartment is not shown on the picture due to the angle of the view. The outer compartment **9** comprises a gas inlet **6** and a gas outlet **7,** a means **5** for spraying a liquid composition comprising a nozzle, a liquid connection **4** connecting the inner compartment of the container **2** to the means **5** for spraying a liquid composition and a gas connection **3** connecting the gas outlet **7** of the outer compartment **9** and to the means **5** for spraying a liquid composition. The liquid connection **4** is partially thermally insulated. The device also comprises a heating unit **20** for heating up the liquid connection **4.** The device also comprises a cover **21.** In operation, the cover is covering partially or fully the opening of the rotating container containing the solid particles to be coated. The cover **21** prevents material (dust or coating composition) from coming out of the rotating container. The cover **21** comprises an opening to which is attached a tube **22.** The tube **22** allows a minimal air circulation between the rotating container and the atmosphere.

## Claims

1. A device (1) for spraying a liquid composition, comprising:
- a container (2) comprising an inner compartment (8) and an outer compartment (9), wherein:
- the inner compartment (8) is suitable for receiving and containing a liquid composition to be sprayed;
- the outer compartment (9) comprises a gas inlet (6) and a gas outlet (7), and is suitable for containing a gas under pressure;
- a means (5) for spraying a liquid composition comprising a gas inlet (13) and a liquid inlet (14);
- a liquid connection (4) connecting the inner compartment (8) of the container (2) to the liquid inlet (14) of the means for spraying a liquid composition (5);
- a gas connection (3) connecting the gas outlet (7) of the outer compartment (9) to the gas inlet (13) of the means (5) for spraying a liquid composition.

2. The device (1) according to claim 1, wherein the means (5) for spraying a liquid composition comprises a means (10) for regulating the flow of the liquid composition to be sprayed, in particular wherein the means (10) for regulating the flow of the liquid composition to be sprayed comprises a threaded component.

3. The device (1) according to claim 1, wherein the means (5) for spraying a liquid composition comprises a nozzle.

4. The device (1) according to claim 1 or 2, wherein the liquid connection (4) is partially or fully thermally insulated.

5. The device (1) according to any one of claims 1 to 3, wherein the means (5) for spraying a liquid composition comprises an air cap (11).

6. The device (1) according to any one of claims 1 to 4, wherein the means (5) for spraying a liquid composition comprises internal parts such that, in operation, the gas velocity at the outlet of the means (5) is smaller than the gas velocity at the gas outlet (7) of the container (2).

7. An arrangement comprising the device according to any one of claims 1 to 6 and a means for heating a gas, wherein the means for heating a gas is upstream of the gas inlet (6).

8. A method for coating a solid, particulate composition with a coating composition, the method comprising the steps of:
a) providing a solid, particulate composition in a rotating container having an opening;
b) starting the rotation of the rotating container;
c) positioning the means for spraying a liquid composition (5) of a device (1) according to anyone of claims 1 to 6 in or near the opening of the rotating container, such that the means is arranged to spray a liquid composition onto the solid, particulate composition;
d) providing an amount of a coating composition in the inner compartment (8) of a device (1) according to any one of claims 1 to 6;
e) providing a gas under pressure, in particular a gas with a temperature above ambient temperature, to the gas inlet (6) of the device according to any one of claims 1 to 6;
f) spraying the coating composition as an aerosol onto the solid, particulate composition, thereby coating the solid, particulate composition with the coating composition; wherein step f) is carried out last.

9. The method according to claim 8, wherein the solid, particulate composition provided in step a) comprises a component selected from the group consisting of urea, ammonium nitrate, calcium nitrate, ammonium phosphate, ammonium sulphate, potassium sulphate, potassium chloride, potassium nitrate, and mixtures thereof.

10. Use of the device according to any one of claims 1 to 5 for coating a solid, particulate composition.
